# EUROPÄISCHE PATENTSCHRIFT

(11) **EP 0 440 023 B1**
(45) Veröffentlichungstag und Bekanntmachung des Hinweises auf die Patenterteilung: **13.04.1994**
(21) Anmeldenummer: 91100212.9
(22) Anmeldetag: 09.01.1991
(51) Int. Cl.: G01N 1/20

(54) **Probenahme-Vorrichtung mit einer Ventileinheit und einer Aufnahmeeinheit**
Sampler with valve and collection unit
Système de prise d'échantillon comprenant une vanne et une unité de prélèvement

(30) Priorität: 30.01.1990 CH 285/90
(43) Veröffentlichungstag der Anmeldung: 07.08.1991
(73) Patentinhaber: Neotecha AG, CH-8634 Hombrechtikon (CH)
(72) Erfinder: Iff, René, CH-4654 Lostorf (CH)
(74) Vertreter: EGLI-EUROPEAN PATENT ATTORNEYS

(56) Entgegenhaltungen:
- GB-A- 2 125 771
- US-A- 4 580 452

## Beschreibung

Die Erfindung betrifft eine Probenahme-Vorrichtung mit einer zur Anordnung auf einer Leitung bestimmten Ventileinheit und einer daran lösbar angeordneten und zur Aufnahme einer Probe eines in der Leitung geführten Fluids vorgesehenen Aufnahmeeinheit, wobei die Ventileinheit in Schliessrichtung federbelastet ist, die Aufnahmeeinheit mit einem in Schliessrichtung federbelasteten Verschluss versehen ist, von der Ventileinheit und der Aufnahmeeinheit die eine nach innen und die andere nach aussen öffnend ausgebildet ist, und bei an der Ventileinheit angeordneter Aufnahmeeinheit die Ventileinheit mit dem Verschluss abdichtend wirkverbunden ist.

Die Entnahme von flüssigen oder gasförmigen Proben aus Leitungen ist aus verschiedenen Gründen (Qualitätskontrolle, Prozessüberwachung, Umweltschutz usw.) immer häufiger erforderlich. Die Proben reichen von harmlosen Produkten wie Wasser (z.B. bei der dessen Aufbereitung) und Getränken über Brennstoffe und reine kalte Lösungsmittel bis zu gefährlichen Chemikalien aller Art (heisse Säuren, Halogenen usw.).

Ungefährliche Stoffe können auf herkömmliche Weise über einen Hahn oder ein Ventil aus der Leitung abgezapft werden. Der dabei entstehende Totraum oder die kurze Sackleitung sind aber sehr nachteilig, da eine gewisse Menge des zu zapfenden Stoffes weggeschüttet und/oder mehr Stoff als nötig gezapft werden muss, um eine repräsentative Probe zu erhalten. Ausserdem erfordert die abtropfende Flüssigkeit eine nachträgliche Spülung und/oder Reinigung.

Je giftiger, gefährlicher und/oder teurer ein Produkt ist, desto mehr Bedeutung ist dem Problem der Probenahme beizumessen. Bei Vorrichtungen zur Entnahme von solchen flüssigen oder gasförmigen Proben aus Leitungen, beispielsweise bei Anlagen der chemischen Industrie oder der Nahrungsmittel- und Getränkeindustrie, ist zu gewährleisten, dass Proben derart aus Leitungen gezapft und in Behälter eingefüllt werden können, dass weder der Inhalt der Leitung noch die Probe mit der umgebenden Luft oder irgendwelchen fremden Stoffen wie Niederschlag oder Rückständen aus einer früheren Probenahme in Kontakt kommen, und auch nach der Abnahme des Behälters kein Produkt austritt und entweder als Gas in die Umgebung entweicht oder als Flüssigkeit heruntertropft.

Aus DE-3142875, GB-907495, US-2041694, SU-363890 oder FR-2067722 sind Ventileinheiten von Probenahme-Vorrichtungen bekannt, die erlauben, eine Probe aus einer Leitung zu entnehmen und einem Stutzen für den Anschluss eines Behälters zuzuführen. Solche Ventileinheiten ohne zugeordneten Behälter und mit nur einem Stutzen können prinzipiell die oben erwähnten Anforderungen nicht erfüllen.

Aus DE-929398, US-3744319 und SU-549706 sind Probenahme-Vorrichtungen bekannt, die erlauben, eine Probe aus einer Leitung zu entnehmen und einem Behälter einer Aufnahmeeinheit zuzuführen. Diese Probenahme-Vorrichtung weisen Toträume auf und erfüllen daher die gestellten Anforderungen nicht.

Aus US-4150575 ist eine Probenahme-Vorrichtung bekannt, die erlaubt, eine Probe aus einer Leitung zu entnehmen und einem mit einem Kolben versehenen Behälter einer Aufnahmeeinheit zuzuführen. Diese Probenahme-Vorrichtung gewährleistet zwar im wesentlichen, dass der Inhalt der Leitung oder der Probe mit der umgebenden Luft nicht in Kontakt kommt und dass nach der Abnahme der Aufnahmeeinheit kein Produkt austritt und in die Umgebung entweicht. Diese Probenahme-Vorrichtung wird jedoch durch das Anbringen bzw. Entfernen der Aufnahmeeinheit betätigt. Der Zeitpunkt der Probenahme wird durch die Betätigung einer Verriegelung der Aufnahmeeinheit auf den Ventilkörper bestimmt, d.h. die Ventileinheit wird bei der Arretierung der Aufnahmeeinheit geöffnet und beim Lösen der Arretierung geschlossen. Wenn die Verriegelung der Aufnahmeeinheit gelöst wird, was von Hand am Hals der Aufnahmeeinheit erfolgt, wird die Aufnahmeeinheit sofort freigegeben, so dass sie von Hand gehalten werden muss. Beim Umgang mit gefährlichen Produkten ist ein solches Vorgehen unzulässig, die Arbeitsvorschriften und der Umweltschutz erfordern eine bessere Sicherheit, die nicht gewährleistet ist. Eine vom Zeitpunkt der Verriegelung der Aufnahmeeinheit unabhängige Betätigung der Ventileinheit ist bei dieser Probenahme-Vorrichtung weder vorgesehen noch möglich.

Aus EP-0141940 ist eine Probenahme-Vorrichtung bekannt, die erlaubt, eine Probe aus einer Leitung zu entnehmen und einem Behälter einer Aufnahmeeinheit zuzuführen. Diese Probenahme-Vorrichtung gewährleistet zwar im wesentlichen, dass der Inhalt der Leitung oder der Probe mit der umgebenden Luft nicht in Kontakt kommt und dass nach der Abnahme der Aufnahmeeinheit kein Produkt austritt und in die Umgebung entweicht. Die erforderliche Sicherheit ist jedoch nicht gewährleistet, da die Ventileinheit auch dann geöffnet werden kann, wenn keine Aufnahmeeinheit an der Ventileinheit angeordnet ist. Es wird nichts dagegen vorgekehrt, dass nach Abnahme der Aufnahmeeinheit Produkt austreten und als Gas in die Umgebung entweichen oder als Flüssigkeit heruntertropfen kann. Eine von der Anwesenheit und Verriegelung der Aufnahmeeinheit abhängige Betätigung der Ventileinheit ist bei dieser Probenahme-Vorrichtung weder vorgesehen noch möglich.

Aufgabe der Erfindung ist es, eine Probenahme-Vorrichtung der eingangs angegebenen Art vorzusehen, bei welcher die Betätigung der Ventileinheit von der Anwesenheit und Verriegelung der Aufnahmeeinheit, jedoch nicht vom Zeitpunkt der Verriegelung der Aufnahmeeinheit abhängig ist.

Diese Aufgabe wird bei einer erfindungsgemässen Probenahme-Vorrichtung gemäss Anspruch 1 dadurch gelöst, dass eine einzige Betätigungsvorrichtung zur gleichzeitigen Betätigung der Ventileinheit und der Aufnahmeeinheit vorgesehen ist, und diese Betätigungsvorrichtung mit dem Verschluss der Aufnahmeeinheit zum Oeffnen derselben wirkverbunden ist und eine mit der Ventileinheit und der Aufnahmeeinheit wirkverbundene Verriegelungsvorrichtung aufweist, deren Ausbildung ein Oeffnen des Verschlusses nur dann erlaubt, wenn die Aufnahmeeinheit an der Ventileinheit angeordnet ist und sich relativ zur Ventileinheit in einer vorbestimmten Betätigungslage befindet.

Vorteilhafte Weiterbildungen der erfindungsgemässen Probenahme-Vorrichtung ergeben sich aus den abhängigen Ansprüchen.

Die erfindungsgemässe Probenahme-Vorrichtung zeichnet sich aus durch eine einfache und sichere Handhabung. Ventileinheit und Aufnahmeeinheit können mittels Schnellverschluss leicht und totraumfrei gekuppelt werden. Die Probenahme kann mit nur mit nur einer Bewegung eines Betätigungshebels vollzogen werden, wobei sich die Ventileinheit und die Aufnahmeeinheit automatisch schliessen, wenn der Hebel losgelassen wird. Als zusätzliche Sicherung können die Kupplung und die Betätigung mechanisch miteinander verriegelt werden, so dass sich die Ventileinheit und die Aufnahmeeinheit nur dann öffnen lassen, wenn die Aufnahmeeinheit an der Ventileinheit in der richtigen Position sitzt.

Nachstehend wird ein Beispiel einer Ausbildung der Erfindung anhand der Zeichnungen näher beschrieben.

Es zeigen:
- Fig. 1: eine Seitenansicht einer erfindungsgemässen Probenahme-Vorrichtung mit einer ersten Variante der Betätigungsvorrichtung,
- Fig. 2: eine Draufsicht der Probenahme-Vorrichtung der Fig. 1 bei auf der Ventileinheit montierter Aufnahmeeinheit, im Schnitt entlang der Linie 31 oder 4c in Fig. 1,
- Fig. 3: eine Draufsicht der in Fig. 2 dargestellten Ventileinheit mit einer zweiten anderen Variante der Betätigungsvorrichtung bei von der Probenahme-Vorrichtung abgenommener Aufnahmeeinheit, ebenfalls im Schnitt entlang der Linie 31 oder 4c in Fig. 1, und
- Fig. 4: eine Draufsicht der in Fig. 2 dargestellten Aufnahmeeinheit mit der zweiten Variante der Betätigungsvorrichtung und bei von der Probenahme-Vorrichtung abgenommenen Ventileinheit, ebenfalls im Schnitt entlang der Linie 31 oder 4c in Fig. 1.

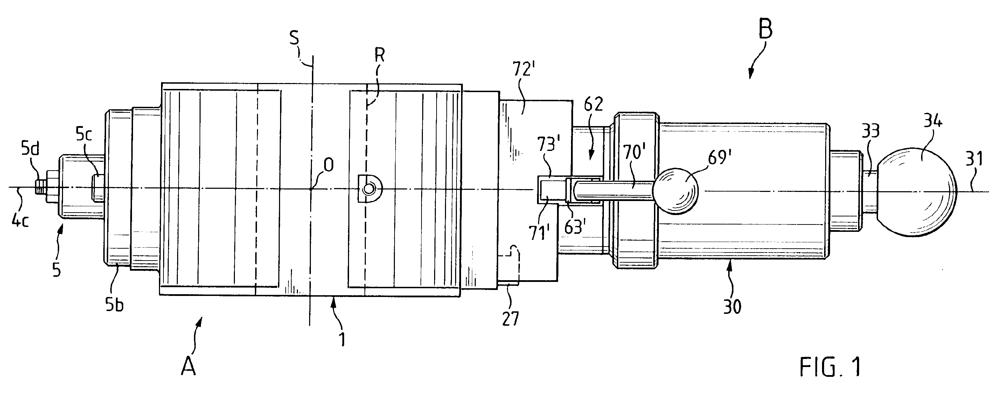

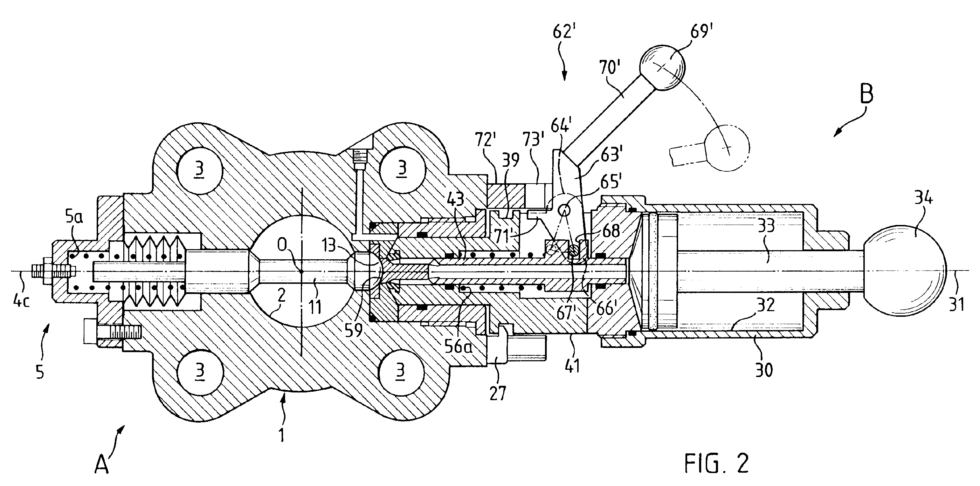

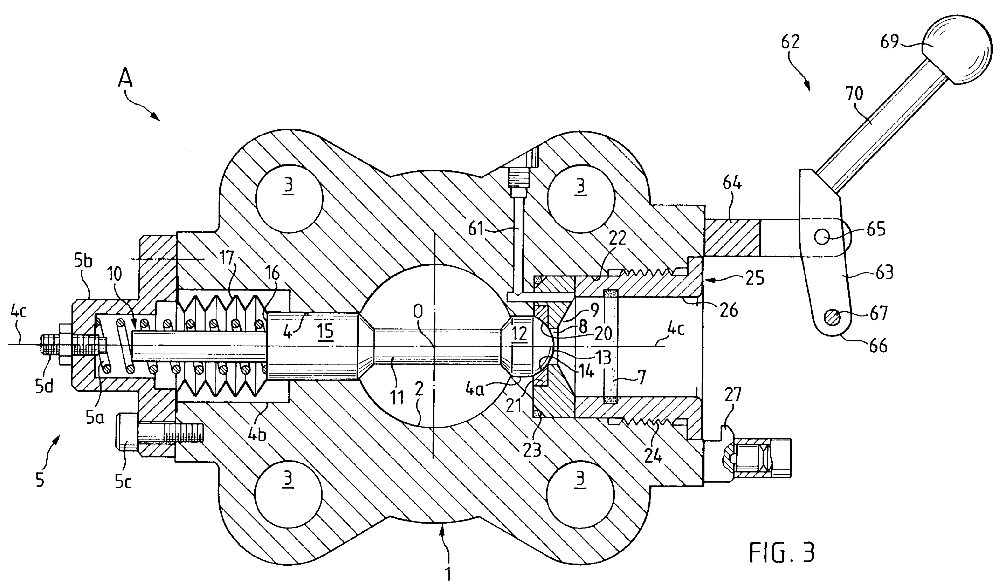

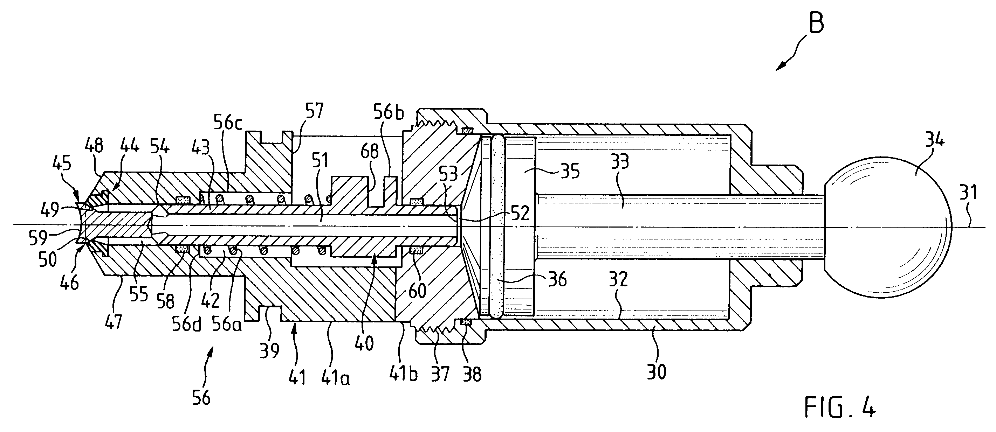

Die in den Figuren 1 und 2 dargestellte Probenahme-Vorrichtung umfasst eine Ventileinheit A und eine Aufnahmeeinheit B, die aufeinander montiert sind. In Fig. 3 wird die Ventileinheit A und in Fig. 4 die Aufnahmeeinheit B einzeln dargestellt.

Die Ventileinheit A ist dazu bestimmt, auf einer Rohrleitung montiert zu werden. Die Aufnahmeeinheit B ist dazu bestimmt, eine Probe eines in der Leitung geführten Fluids aufzunehmen. Die Rohrleitung, auf welche die Ventileinheit A montiert ist, wird in Fig. 1 mit den gestrichelten Linien R angedeutet und deren Achse wird mit S bezeichnet. Die Achse S schneidet die Ebene der Fig. 2 und 3 im Zentrum O. Die Aufnahmeeinheit B ist in der zur Aufnahme der Probe vorgesehenen Lage an der Ventileinheit A angeordnet und daran lösbar angeschlossen. Nach erfolgter Aufnahme der Probe kann die Aufnahmeeinheit B von der Ventileinheit A abgenommen werden.

Die Ventileinheit A (vgl. Fig. 1, 2 und 3) weist ein Ventilgehäuse 1 auf, das von einer Bohrung 2 durchquert wird, deren Innendurchmesser und Richtung der Rohrleitung R entspricht. Der Montage und Befestigung der Ventileinheit A auf die Rohrleitung R dienen beispielsweise vier durchgehende Montage-Bohrungen 3, die im äusseren Bereich des Ventilgehäuses 1 regelmässig angebracht sind.

Rechtwinklig zur Achse S und diametral zur Bohrung 2 ist ein Ventilkanal 4 vorgesehen, dessen geradlinige Längsachse 4c durch das Zentrum O läuft. Somit durchquert der Ventilkanal 4 das Ventilgehäuse 1 im wesentlichen diametral zur Bohrung 2.

Auf der einen Seite der Bohrung 2 dient ein Teil des Ventilkanals 4 als Austrittskanal 4a für die Probenahme. An einem seiner Enden mündet der Austrittskanal 4a in die Bohrung 2 ein, im Bereich seines anderen Endes weist er einen Ventilsitz 20 für einen weiter unten beschriebenen Ventilkopf 12 auf. Der betreffende Teil des Ventilkanals 4 erstreckt sich vom Ventilsitz 20 nach aussen über eine Austrittsbohrung 8 bis zu einer Austrittsöffnung 9 der Ventileinheit A.

Auf der anderen Seite der Bohrung 2 sind ein Teil 4b des Ventilkanals 4 sowie das Ventilgehäuse 1 zur Aufnahme einer weiter unten beschriebenen Schliessvorrichtung 5 der Ventileinheit A ausgebildet.

Im Ventilkanal 4 ist eine längliche Ventilstange 11 eines Ventilkörpers 10 zwischen zwei Endlagen bewegbar angeordnet, indem die Ventilstange 11 im Ventilkanal 4 in Richtung der Längsachse 4c verschiebbar gelagert ist. Am einen Ende der Ventilstange 11 ist der Ventilkopf 12 angeordnet und an der Ventilstange 11 angeformt.

In der einen Endlage des Ventilkörpers 10 wirkt der Ventilkopf 12 mit dem Ventilsitz 20 zusammen, derart, dass der Ventilkopf 12 von innen, d.h. an der dem Zentrum O zugewandten Seite des Ventilsitzes 20 daran anliegt. In dieser Schliesslage des Ventilkörpers 10 ist die Verbindung zwischen der Bohrung 2 und der Austrittsöffnung 9 für das Fluid unterbrochen und somit die Ventileinheit A geschlossen. Zu diesem Zweck ist der Ventilkopf 12 in Nähe des Ventilsitzes 20 mit einer Fläche 13 versehen, die im wesentlichen die Form einer konvexen Kugelkalotte aufweist, und der Ventilsitz 20 in Nähe des Ventilkopfes 12 mit einer Fläche 14 versehen, die im wesentlichen die Form einer konkaven Kugelkalotte oder eines Kegelstumpfes oder noch eines Ringes aufweist, so dass die beiden Flächen 13 und 14 abdichtend zusammenpassen, wenn sie aneinander anliegen und aufeinander gedrückt werden. Zur noch besseren Abdichtung kann der Ventilsitz 20 beispielsweise aus einem Dichtungsmaterial wie beispielsweise Silicon oder PTFE bestehen, während das Material der Ventileinheit A beispielsweise Edelstahl oder gegebenenfalls mit beispielsweise PTFE beschichtetes Metall wie Stahlguss ist. Gewisse Teile können auch in Keramik, Kunststoff oder anderen korrosionsbeständigen Werkstoffen ausgeführt werden.

In der anderen Endlage des Ventilkörpers 10 liegt der Ventilkopf 12 im Abstand vom Ventilsitz 20 nach innen, derart, dass das Fluid in dieser Oeffnungslage des Ventilkörpers 10 von der Bohrung 2 zur Austrittsöffnung 9 gelangen kann und somit die Ventileinheit A geöffnet ist.

An seinem vom Ventilkopf 12 abgewandten Ende wirkt der Ventilkörper 10 mit der Schliessvorrichtung 5 der Ventileinheit A zusammen. Diese Schliessvorrichtung 5 umfasst im wesentlichen ein Federelement 5a, das im wesentlichen im Teil 4b des Ventilkanals 4 zwischen dem Ventilkörper 10 und einem Deckel 5b angeordnet ist. Der Deckel 5b ist über Befestigungsbolzen 5c am Ventilgehäuse 1 abgestützt. Wenn der Deckel 5b am Ventilgehäuse 1 montiert ist, wird das Federelement 5a in Richtung der Längsachse 4c zwischen dem Ventilkörper 10 und dem Deckel 5b zusammengedrückt, so dass der Ventilkörper 10 mit der Ventilstange 11 und dem Ventilkopf 12 ständig in Richtung der Längsachse 4c von innen zur Austrittsöffnung 9 der Ventileinheit A hin federbelastet ist. Zu diesem Zweck umfasst der Ventilkörper 10 im Bereich des Ventilgehäuses 1 auf seiner dem Deckel 5b zugewandten Seite einen zylindrischen Abschnitt 15, der einen grösseren Durchmesser aufweist als der Durchmesser der Ventilstange 11 und somit einen Absatz 16 bildet, der als Anschlag für das Federelement 5a der Schliessvorrichtung 5 am Ventilkörper 10 dient. Im übrigen dient der zylindrische Abschnitt 15 noch der exakten Führung des Ventilkörpers 10 im Ventilkanal 4, während ein Faltenbalg 17, der an seinem einen Ende mit dem Absatz 16 verbunden und an seinem anderen zwischen dem Ventilgehäuse 1 und dem Deckel 5b geklemmt ist, der Abdichtung des Ventilkörpers 10 zum Ventilgehäuse 1 hin sowie nach aussen dient.

Daraus folgt, dass die Ventileinheit A in Fig. 2 und 3 in einer Lage dargestellt ist, bei welcher die Verbindung zwischen der Bohrung 2 und der Austrittsöffnung 9 für das Fluid unterbrochen und somit die Ventileinheit A geschlossen ist. Die Ventileinheit A ist dann hermetisch abgedichtet und kann nur dadurch geöffnet werden, dass (beispielsweise auf die weiter unten beschriebene Weise) der Ventilkopf 12 gegen die Kraft des Federelements 5a der Schliessvorrichtung 5 nach innen gedrückt wird.

Eine Regulierschraube 5d erlaubt die Einstellung der Endlage des Ventilkörpers 10 und somit des Abstands zwischen dem Ventilkopf 12 und dem Ventilsitz 20 bei geöffneter Ventileinheit A. Mit der Regulierschraube 5d kann also der Durchfluss des Fluids von der Bohrung 2 zur Austrittsöffnung 9 bei maximaler Oeffnung der Ventileinheit A eingestellt werden.

Der Ventilsitz 20 ist in einem ringförmigen Aufnahmeteil 21 eingefasst, der in einer mit der Längsachse 4c konzentrischen Aufnahmebohrung 22 entfernbar eingesetzt und durch eine Dichtung 23 gegenüber dem Ventilgehäuse 1 abgedichtet ist. Das Aufnahmeteil 21 wird mit Hilfe einer in die Aufnahmebohrung 22 beim Gewinde 24 eingeschraubten Hülse 25 am Ventilgehäuse 1 befestigt. Die Austrittsöffnung 9 ist somit am Aufnahmeteil 21 angeordnet.

Wie bereits erwähnt erstreckt sich der betreffende Teil des Ventilkanals 4 vom Ventilsitz 20 nach aussen über die Austrittsbohrung 8 bis zur einer Austrittsöffnung 9 der Ventileinheit A. Die Austrittsöffnung 9 liegt im Abstand vom Ventilsitz 20. Die Ventilstange 11 befindet sich ganz ausserhalb der Austrittsöffnung 9 und im wesentlichen ausserhalb der Austrittsbohrung 8. Das Aufnahmeteil 21, der Ventilsitz 20, die Austrittsbohrung 8 und die Austrittsöffnung 9 bilden somit eine nach dem Abschrauben der Hülse 25 leicht austauschbare Einheit, deren Entfernung und/oder Austausch die Wartung der Ventileinheit A entscheidend vereinfacht.

Der Durchmesser der Austrittsbohrung 8 und der Austrittsöffnung 9 ist unabhängig vom Durchmesser des Austrittskanals 4a und des Ventilkopfes 12, was erlaubt, diesen Durchmesser frei zu wählen, beispielsweise zur Anpassung einer in Serie produzierten Ventileinheit A an verschiedene Fluida, an entsprechende Sicherheitsvorschriften und dergleichen.

Die Innenfläche der Hülse 25 ist zylindrisch ausgebildet und mit der zylindrischen Innenfläche der Austrittsbohrung 8 über eine entsprechende Innenfläche des Aufnahmeteils 21 verbunden, die eine Mantelfläche eines Kegelstumpfes ist. Zusammen bilden die Innenflächen der Hülse 25 und des Aufnahmeteils 21 eine Hohlform, die dazu bestimmt ist, eine dazu passende Form eines Verschlussgehäuses 41 der Aufnahmeeinheit B aufzunehmen. Durch Austausch der Hülse 25 und des Aufnahmeteils 21 kann die Anpassung einer in Serie produzierten Ventileinheit A an verschiedene Aufnahmeeinheiten B erfolgen.

Die Aufnahmeeinheit B (vgl. Fig. 1, 2 und 4) umfasst zunächst einen zylindrischen Behälter 30, der ähnlich dem Körper einer Spritze ausgebildet ist. Die geradlinige Längsachse des Behälters 30 ist mit 31 bezeichnet. Im Behälter 30 ist ein zylindrischer Hohlraum 32 zur Aufnahme der Probe des Fluids vorgesehen. Im Hohlraum 32 ist ein dem Stempel einer Spritze ähnlicher Stempel 33 in Richtung der Längsachse 31 verschiebbar angeordnet und über einen Knauf 34 von Hand betätigbar, um einen Kolben 35 den Hohlraum 32 entlang zu verschieben. Der Kolben 35 ist gegenüber der zylindrischen Innenfläche des Hohlraums 32 durch eine Ringdichtung 36 abgedichtet. Der Hohlraum 32 wird also durch den Kolben 35 in zwei Teile geteilt, nämlich in einen ersten Teil zur Aufnahme der Probe und in einen zweiten, restlichen Teil, der beispielsweise mit der umgebenden Luft gegebenenfalls über ein nicht dargestelltes Filter kommuniziert oder beispielsweise durch einen Faltenbalg abgeschlossen wird.

In den Figuren 1, 2 und 4 ist der Stempel 33 in seiner maximal eingeschobenen Lage dargestellt, bei welcher der zur Aufnahme der Probe bestimmte Teil des Hohlraums 32 am kleinsten, d.h. bis auf einen unbedeutenden Totraum reduziert ist.

Die Aufnahmeeinheit B (vgl. Fig. 1, 2 und 4) umfasst ferner das bereits erwähnte Verschlussgehäuse 41, das beispielsweise wie in Fig. 2 und 4 dargestellt mit Hilfe eines Gewindes 37 auf den Behälter 30 aufgeschraubt und dabei gegenüber der zylindrischen Innenfläche des Hohlraums 32 durch eine Ringdichtung 38 abgedichtet ist. Es ist aber auch möglich, das Verschlussgehäuse 41 mit anderen Mitteln auf den Behälter 30 zu befestigen, beispielsweise mit einem Bajonettverschluss oder dergleichen.

Im Verschlussgehäuse 41 ist ein Verschlusskanal 42 vorgesehen, der das Verschlussgehäuse 41 in Richtung der Längsachse 31 des Behälters 30 durchquert. An einem seiner Enden 52 mündet der Verschlusskanal 42 in den Hohlraum 32 ein, im Bereich seines anderen Endes weist er einen Verschlusssitz 44 für einen weiter unten beschriebenen Verschlusskopf 45 auf. Der Verschlusskanal 42 erstreckt sich in Nähe des Verschlusssitzes 44 nach aussen bis zu einer Eintrittsöffnung 46 der Aufnahmeeinheit B.

In Nähe des Verschlusssitzes 44 ist das Verschlussgehäuse 41 mit einer zylindrischen Aussenfläche 47 und einer kegelstumpfförmigen Endfläche 48 versehen, die sich auch über den Verschlusssitz 44 bis zur Eintrittsöffnung 46 erstreckt. Zusammen bilden die Aussenfläche 47 und die Endfläche 48 eine Form, die zu den Innenflächen der Hülse 25 und des Aufnahmeteils 21 der Ventileinheit A passt und dazu bestimmt ist, bei der Montage des Verschlussgehäuses 41 der Aufnahmeeinheit B auf das Ventilgehäuse 1 der Ventileinheit A die genaue Positionierung und vollständige Abdichtung dieser Teile zueinander bei Uebereinstimmung der jeweiligen Längsachsen 4c und 31 zu gewährleisten.

Im Verschlusskanal 42 ist eine längliche Verschlussstange 43 eines Verschlusskörpers 40 zwischen zwei Endlagen bewegbar angeordnet, indem die Verschlussstange 43 im Verschlusskanal 42 in Richtung der Längsachse 31 verschiebbar gelagert ist. Am einen Ende der Verschlussstange 43 ist der bereits erwähnte Verschlusskopf 45 angeordnet und an der Verschlussstange 43 angeformt. In Nähe des Verschlusssitzes 44 ist einer Endfläche 59 des Verschlusskopfes 45 im wesentlichen die Form einer konkaven Kugelkalotte gegeben, die zur Form der als konvexe Kugelkalotte ausgebildeten Fläche 13 des Ventilkopfes 12 der Ventileinheit A genau zusammenpasst.

In der einen Endlage des Verschlusskörpers 40 wirkt der Verschlusskopf 45 mit dem Verschlusssitz 44 zusammen, derart, dass der Verschlusskopf 45 von aussen, d.h. an der dem Behälter 30 abgewandten Seite des Verschlusssitzes 44 daran anliegt. In dieser Schliesslage des Verschlusskörpers 40 ist die Verbindung zwischen dem Behälter 30 und der Eintrittsöffnung 46 der Aufnahmeeinheit B für das Fluid unterbrochen und somit die Aufnahmeeinheit B geschlossen. Zu diesem Zweck ist der Verschlusskopf 45 in Nähe des Verschlusssitzes 44 mit einer Fläche 49 versehen, die im wesentlichen die Form eines Kegelstumpfes oder eines Kugelsegments aufweist, und der Verschlusssitz 44 in Nähe des Verschlusskopfes 45 mit einer Fläche 50 versehen, die im wesentlichen die Form eines Hohlkegelstumpfes oder eines konkaven Kugelsegments oder noch eines Ringes aufweist, so dass die beiden Flächen 49 und 50 abdichtend zusammenpassen, wenn sie aneinander anliegen und aufeinander gedrückt werden. Zur noch besseren Abdichtung kann der Verschlusssitz 44 beispielsweise aus einem Dichtungsmaterial wie beispielsweise Silicon oder PTFE bestehen, während das Material der Aufnahmeeinheit B beispielsweise Edelstahl oder gegebenenfalls beispielsweise mit PTFE beschichtetes Metall wie Stahlguss ist. Gewisse Teile können auch in Keramik, Kunststoff oder anderen korrosionsbeständigen Werkstoffen ausgeführt werden.

Des weiteren liegt, in dieser Schliesslage des Verschlusskörpers 40, das andere Ende 53 der Verschlussstange 43 im wesentlichen am Ende 52 des Verschlusskanals 42, wo dieser in den Hohlraum 32 einmündet. In dieser Schliesslage des Verschlusskörpers 40 erstreckt sich die Verschlussstange 43 somit im wesentlichen nicht nur über die ganze Länge des Verschlusskanals 42, sondern im Bereich des Verschlusskopfes 45 noch durch die sie umschliessende Eintrittsöffnung 46 der Aufnahmeeinheit B hindurch und darüber hinaus.

In der anderen Endlage des Verschlusskörpers 40 liegt der Verschlusskopf 45 im Abstand vom Verschlusssitz 40 nach aussen, derart, dass das Fluid in dieser Oeffnungslage des Verschlusskörpers 40 über die Eintrittsöffnung 46 in den Hohlraum 32 des Behälter 30 gelangen kann und somit die Aufnahmeeinheit B geöffnet ist. Zu diesem Zweck ist der Verschlusskörper 40 mit einer axialen Längsbohrung 51 versehen, die sich vom Ende 53 der Verschlussstange 43 bis zu einer kurz vor dem Verschlusskopf 45 gelegenen Stelle 54 erstreckt. An dieser Stelle 54 erstellen schräg zur Längsachse 31 angeordnete Bohrungen eine Verbindung zwischen der Längsbohrung 51 und einem Hohlraum 55, der im Verschlusskanal 42 und koaxial dazu den Verschlusskopf 45 von der Stelle 54 bis zur Eintrittsöffnung 46 umschliesst.

Im Bereich der Längsbohrung 51 wirkt der Verschlusskörper 10 mit einer Schliessvorrichtung 56 der Aufnahmeeinheit B zusammen. Diese Schliessvorrichtung 56 umfasst im wesentlichen ein Federelement 56a, das im wesentlichen im Verschlusskanal 42 zwischen dem Verschlusskörper 40 und dem Verschlussgehäuse 41 angeordnet ist. Das Federelement 56a wird in Richtung der Längsachse 31 zwischen dem Verschlusskörper 40 und Verschlussgehäuse 41 komprimiert, so dass der Verschlusskörper 40 mit der Verschlussstange 43 und dem Verschlusskopf 45 ständig in Richtung der Längsachse 31 von aussen zur Eintrittsöffnung 46 der Aufnahmeeinheit B hin federbelastet ist. Zu diesem Zweck umfasst der Verschlusskörper 40 etwa in seinem mittleren Bereich einen Block 56b, der in einer entsprechenden Ausnehmung 57 des Verschlussgehäuses 41 beweglich angeordnet ist und dessen dem Verschlusskopf 45 zugewandte Seite einen Anschlag für das Federelement 56a bildet. Die Ausnehmung 57 führt vom Verschlusskanal 42 im wesentlichen radial zur Längsachse 31 nach aussen. Am Verschlusskanal 42 ist ein zylindrischer Abschnitt 56c vorgesehen, der sich von der Ausnehmung 57 bis kurz vor der Stelle 54 erstreckt und einen grösseren Durchmesser aufweist als der Durchmesser der Verschlussstange 43. Daher bildet dieser zylindrische Abschnitt 56c an seinem dem Verschlusssitz 44 näheren Ende einen Absatz 56d, der als Anschlag für das Federelement 56a der Schliessvorrichtung 56 am Verschlussgehäuse 41 dient.

Zur Erleichterung der Montage insbesondere des Verschlusskörpers 40 und des Federelements 56a in das Verschlussgehäuse 41 ist dieses beispielsweise zweiteilig mit zwei Teilen 41a und 41b ausgebildet. Die beiden Teile 41a und 41b sind mit (nicht dargestellten) Schrauben aufeinander befestigt, sie können aber auch auf andere Weise aufeinander befestigt, beispielsweise aufeinander aufgeschraubt sein.

Der zwischen dem Verschlusssitz 44 und dem Absatz 56d gelegene zylindrische Abschnitt des Verschlusskanals 42 dient der exakten Führung des Verschlusskörpers 40 im Verschlusskanal 42, wobei dieser Abschnitt des Verschlusskanals 42 durch eine Ringdichtung 58 abgedichtet wird. Ein Fluid, das durch die Eintrittsöffnung 46 in den Hohlraum 55 eintritt, kann somit nicht weiter zum Abschnitt 56c des Verschlusskanals 42 und von dort über die Ausnehmung 57 nach aussen gelangen. Ausserdem wird der Verschlusskörper 40 in Nähe des Endes 52 des Verschlusskanals 42 gegenüber einem zylindrischen Endbereich der Verschlussstange 43 durch eine Ringdichtung 60 abgedichtet, das Fluid kann somit vom Hohlraum 55 nur zur Bohrung 51 und von dort nur zum Ende 53 der Verschlussstange 43 und dann, dem Rückzug des Kolbens 35 entsprechend, zum Hohlraum 32 des Behälters 30 gelangen.

Daraus folgt, dass die Aufnahmeeinheit B in Fig. 4 in einer Lage dargestellt ist, bei welcher die Verbindung zwischen der Eintrittsöffnung 46 und dem Hohlraum 32 des Behälters 30 für das Fluid unterbrochen und somit die Aufnahmeeinheit B geschlossen ist. Die Aufnahmeeinheit B ist dann hermetisch abgedichtet und kann nur dadurch geöffnet werden, dass (beispielsweise auf die weiter unten beschriebene Weise) der Verschlusskörper 40 gegen die Kraft des Federelements 56a der Schliessvorrichtung 56 nach aussen gedrückt wird.

Die Aufnahmeeinheit B ist an der Ventileinheit A mittels eines Schnellverschlusses befestigbar. In der dargestellten Variante ist dieser Schnellverschluss ein Bajonettverschluss, bei welchem ein Nocken 27 der Ventileinheit A mit einer Nut 39 der Aufnahmeeinheit B zusammenwirkt, aber erst dann voll einrastet, wenn sich die Aufnahmeeinheit B relativ zur Ventileinheit A in einer vorbestimmten Drehlage befindet, welche die Endlage der dem Bajonettverschluss entsprechenden Drehung ist. Wenn die Aufnahmeeinheit B an der Ventileinheit A beispielsweise mittels des dargestellten Schnellverschlusses befestigt ist, dient eine Ringdichtung 7 der Abdichtung zwischen der Aussenfläche 47 des Verschlussgehäuses 41 der Aufnahmeeinheit B und der zylindrischen Innenfläche 26 der Hülse 25 der Ventileinheit A. Ausserdem kann eine zusätzliche Abdichtung erfolgen, indem (in Nähe der im wesentlichen zusammenfallenden Eintrittsöffnung 46 der Aufnahmeeinheit B und Austrittsöffnung 9 der Ventileinheit A) der Verschlusssitz 44 der Aufnahmeeinheit B auf das Aufnahmeteil 21 der Ventileinheit A angepresst wird.

Ein ähnliches, in der Zeichnung nicht dargestelltes Ergebnis ist mit einem Gewinde oder einem Steckverschluss anstelle des Bajonettverschlusses erreichbar, sofern die Endlage der dem Gewinde entsprechenden Drehung bzw. der dem Steckverschluss entsprechenden Einführbewegung aus Gründen, die weiter unten erläutert werden, mit genügender Genauigkeit definiert ist.

Wenn die Aufnahmeeinheit B an der Ventileinheit A befestigt ist, liegen die Endfläche 59 des Verschlusskopfes 45 der Aufnahmeeinheit B und die Fläche 13 des Ventilkopfes 12 der Ventileinheit A genau zusammenpassend aneinander. Somit bleibt zwischen der Aufnahmeeinheit B und der Ventileinheit A kein nennenswerter Totraum übrig, dessen Inhalt sich mit der Probe vermischen und diese verfälschen könnte. Nötigenfalls kann ein solcher Totraum, insbesondere während der Einführung der Aufnahmeeinheit B in die Ventileinheit A, über den durch das Aufnahmeteil 21 und das Verschlussgehäuse 41 von diesem Totraum nach aussen führenden Kanal 61 entlüftet, mit Schutzgas gespült oder gar unter Vakuum gesetzt werden.

Die erfindungsgemässe Vorrichtung wird zur Probenahme mit Hilfe einer einzigen Betätigungsvorrichtung 62 für die gleichzeitige Oeffnung der Ventileinheit A und der Aufnahmeeinheit B betätigt. Diese Betätigungsvorrichtung 62 umfasst eine zweiteilige Mitnehmervorrichtung. Der eine Teil der Mitnehmervorrichtung ist mit dem Ventilgehäuse 1, der andere Teil der Mitnehmervorrichtung mit der Verschlussstange 43 wirkverbunden. Die Betätigung der Mitnehmervorrichtung ist aber - wie nachstehend erläutert wird - nur dann möglich, wenn die Aufnahmeeinheit B an der Ventileinheit A in ihrer Endlage befestigt ist.

In einer in Fig. 3 und 4 dargestellten Variante der Betätigungsvorrichtung 62 umfasst der eine Teil der Mitnehmervorrichtung im wesentlichen einem länglichen Hebel 63, der etwa in seiner Mitte an einem am Ventilgehäuse 1 vorgesehenen Trägerelement 64 mittels eines Zapfens 65 angelenkt ist. Der Hebel 63, das Trägerelement 64 und der Zapfen 65 sind derart dimensioniert und gegenseitig angeordnet, dass die Schwenkachse des Hebels 63 im Zapfen 65 im wesentlichen rechtwinklig zur Längsachse 4c und die Schwenkebene des Hebels 63 im wesentlichen rechtwinklig zur Achse S der Rohrleitung R verläuft, und dass ein Ende 66 des Hebels 63 in die Ausnehmung 57 des Verschlussgehäuses 41 der Aufnahmeeinheit B einführbar ist, wenn diese an der Ventileinheit A in ihrer Endlage befestigt ist.

In Nähe seines Endes 66 ist am Hebel 63 ein etwa zylindrischer Nocken 67 angeordnet, dessen Achse ebenfalls im wesentlichen rechtwinklig zur Längsachse 4c verläuft. Der Nocken 67 ist derart dimensioniert und am Hebel 63 angeordnet, dass er in eine Ausnehmung 68 des Blocks 56b der Aufnahmeeinheit B einführbar ist, wenn diese an der Ventileinheit A in ihrer Endlage befestigt ist und das Ende 66 des Hebels 63 in die Ausnehmung 57 der Aufnahmeeinheit B eingeführt wird.

Der Hebel 63 und sein Nocken 67 sind mit Hilfe eines mit einem Knauf 69 versehenen Griffes 70 von Hand betätigbar. Es ist allerdings zu verstehen, dass auch bekannte motorische, insbesondere hydraulische oder pneumatische Varianten zur Betätigung des Hebels 63 verwendbar sind.

Der andere Teil der Mitnehmervorrichtung besteht im wesentlichen aus der bereits erwähnten Ausnehmung 68 des Blocks 56b der Aufnahmeeinheit B.

Es ist erkennbar, dass der Hebel 63 bzw. der Nocken 67 der Ventileinheit A nur dann in die Ausnehmung 57 des Verschlussgehäuses 41 bzw. die Ausnehmung 68 des Blocks 56b der Aufnahmeeinheit B einführbar sind, wenn das Verschlussgehäuse 41 gegenüber dem Ventilgehäuse 1 richtig eingesetzt, d.h. weder verdreht noch versetzt ist. Es ist auch erkennbar, dass das Verschlussgehäuse 41 gegenüber dem Ventilgehäuse 1 erst dann bewegt, d.h. verdreht oder versetzt werden kann, wenn der Hebel 63 bzw. der Nocken 67 der Ventileinheit A aus der Ausnehmung 57 des Verschlussgehäuses 41 bzw. der Ausnehmung 68 des Blocks 56b der Aufnahmeeinheit B herausgedreht worden ist. Somit bildet die zweiteilige Mitnehmervorrichtung gleichzeitig eine zweiteilige Verriegelungsvorrichtung für die Aufnahmeeinheit B auf die Ventileinheit A, die ein Oeffnen des Verschlusses nur dann erlaubt, wenn die Aufnahmeeinheit an der Ventileinheit angeordnet ist und sich relativ zur Ventileinheit in der vorbestimmten Betätigungslage befindet.

In einer anderen, in Fig. 2 dargestellten Variante der Betätigungsvorrichtung 62' umfasst der eine Teil der Mitnehmervorrichtung einen länglichen Hebel 63', der etwa in seiner Mitte an einem am Verschlussgehäuse 41 vorgesehenen Trägerelement 64' mittels eines Zapfens 65' angelenkt ist. Der Hebel 63', das Trägerelement 64' und der Zapfen 65' sind derart dimensioniert und gegenseitig angeordnet, dass die Schwenkachse des Hebels 63' im Zapfen 65' im wesentlichen rechtwinklig zur Längsachse 31 liegt und ein Ende 66' des Hebels 63' in die Ausnehmung 57 des Verschlussgehäuses 41 einführbar ist.

In Nähe seines Endes 66' ist am Hebel 63' ein etwa zylindrischer Nocken 67' angeordnet, dessen Achse ebenfalls im wesentlichen rechtwinklig zur Längsachse 31 verläuft. Der Nocken 67' ist derart dimensioniert und am Hebel 63' angeordnet, dass er in die Ausnehmung 68 des Blocks 56b einführbar ist, wenn das Ende 66' des Hebels 63' in die Ausnehmung 57 eingeführt wird.

Der Hebel 63' und sein Nocken 67' sind mit Hilfe eines mit einem Knauf 69' versehenen Griffes 70' von Hand betätigbar. Ebenfalls hier ist allerdings zu verstehen, dass auch bekannte motorische, insbesondere hydraulische oder pneumatische Varianten zur Betätigung des Hebels 63' verwendbar sind.

Dieser Teil der Mitnehmervorrichtung umfasst ausserdem die bereits erwähnte Ausnehmung 68 des Blocks 56b der Aufnahmeeinheit B.

Es ist erkennbar, dass der Hebel 63' bzw. der Nocken 67' jederzeit in die Ausnehmung 57 des Verschlussgehäuses 41 bzw. die Ausnehmung 68 des Blocks 56b einführbar sind, während dieser Teil der Mitnehmervorrichtung keinen Zusammenhang mit der Ventileinheit A aufweist. Dieser Teil der Mitnehmervorrichtung ist also nur mit der Verschlussstange 43 wirkverbunden.

Der andere, mit dem Ventilgehäuse 1 wirkverbundene Teil der Mitnehmervorrichtung besteht im wesentlichen aus dem Schnellverschluss, mit dessen Hilfe die Aufnahmeeinheit B an der Ventileinheit A befestigbar ist.

Somit bildet die zweiteilige Mitnehmervorrichtung bei dieser in Fig. 2 dargestellten Variante an sich noch keine Verriegelungsvorrichtung für die Aufnahmeeinheit B auf die Ventileinheit A, die ein Oeffnen des Verschlusses nur dann erlauben würde, wenn die Aufnahmeeinheit an der Ventileinheit angeordnet ist und sich relativ zur Ventileinheit in der vorbestimmten Betätigungslage befindet. Zur Erreichung dieser Verriegelung ist in der in Fig. 2 dargestellten Variante der Betätigungsvorrichtung 62' eine besondere Verriegelungsvorrichtung vorgesehen, die zweiteilig mit einem am Ventilgehäuse und einem am Verschlussgehäuse angeordneten Teil ausgebildet ist.

Der am Verschlussgehäuse angeordnete Teil der Verriegelungsvorrichtung umfasst einen am Hebel 63' angeordneten Nocken 71', während der an der Verriegelungsvorrichtung angeordnete Teil der Verriegelungsvorrichtung einen am Ventilgehäuse 1 fest angeordneten Steg 72' und eine darin vorgesehene Ausnehmung 73' umfasst. Der Hocken 71', der Steg 72' und die Ausnehmung 73' sind derart dimensioniert und gegenseitig angeordnet, dass der Nocken 71' durch Bewegung des Hebels 63' erst dann in die Ausnehmung 73' einführbar ist, wenn das Verschlussgehäuse 41 gegenüber dem Ventilgehäuse 1 richtig eingesetzt, d.h. weder verdreht noch versetzt ist.

Es ist erkennbar, dass das Verschlussgehäuse 41 gegenüber dem Ventilgehäuse 1 erst dann bewegt, d.h. verdreht oder versetzt werden kann, wenn der Hebel 63' bzw. der Nocken 71' der Aufnahmeeinheit B aus der Ausnehmung 73' der Ventileinheit A herausgedreht worden ist. Somit sorgt diese zweiteilige Verriegelungsvorrichtung dafür, dass ein Oeffnen des Verschlusses nur dann erlaubt wird, wenn die Aufnahmeeinheit an der Ventileinheit angeordnet ist und sich relativ zur Ventileinheit in der vorbestimmten Betätigungslage befindet.

Bei allen vorangehend beschriebenen Varianten wird die erfindungsgemässe Probenahme-Vorrichtung auf folgende Weise benutzt. Es sei angenommen, dass in der Ausgangslage die Ventileinheit A auf der Leitung R montiert und die Aufnahmeeinheit B separat, also von der Ventileinheit A getrennt bereitgestellt wird. In der Aufnahmeeinheit B ist der Hohlraum 32 des Behälters 30 nötigenfalls mit Schutzgas oder Schutzflüssigkeit gespült und der Kolben 35 samt Stempel 33 und Knauf 34 bis zum Ende 52 des Verschlusskanals 42 eingerückt worden. Nun wird die Aufnahmeeinheit B in die Ventileinheit A eingeführt und mit Hilfe des Schnellverschlusses daran befestigt bzw. verriegelt. Nach Erreichung der Endlage (Drehlage oder Stecklage) der Aufnahmeeinheit B an der Ventileinheit A lassen sich der Knauf 69 bzw. 69' und Griff 70 bzw. 70' so bewegen, dass der Nocken 67 bzw. 67' in die Ausnehmung 68 des Blocks 56b eingreift und mit ihr zusammenwirkt, um den Verschlusskörper 40 der Aufnahmeeinheit B gegen die Kraft des Federelements 56a zur Ventileinheit A hin zu verschieben. Da der Verschlusskopf 45 der Aufnahmeeinheit B und der Ventilkopf 12 der Ventileinheit A genau zusammenpassen und aneinander anliegen, bewirkt die Verschiebung des Verschlusskörpers 40 der Aufnahmeeinheit B auch die entsprechende Verschiebung des Ventilkörpers 10 der Ventileinheit A gegen die Kraft des Federelements 5a. Die Aufnahmeeinheit B und die Ventileinheit A werden also zusammen geöffnet, was dem in der Rohrleitung R befindlichen Fluid erlaubt, in den Hohlraum 32 des Behälters 30 zu gelangen, womit die Probe in den Hohlraum 32 des Behälters eingefüllt wird.

Beim Loslassen des Knaufes 69 bzw. 69' und Griffes 70 bzw. 70' bewirkt die Kraft der Federelemente 5a und 56a das Schliessen der Aufnahmeeinheit B und der Ventileinheit A. Erst nach diesem Schliessen erlaubt die Verriegelungsvorrichtung, die Aufnahmeeinheit B von der Ventileinheit A abzunehmen. Da zwischen der Aufnahmeeinheit B und der Ventileinheit A kein nennenswerter Totraum existiert, wird beim Abnehmen der Aufnahmeeinheit B von der Ventileinheit A keine nennenswerte Menge des gegebenenfalls gefährlichen Fluids freigesetzt, es kann weder unerwünschte Flüssigkeit abtropfen noch unerwünschtes Gas in die Luft gelangen. Die Probe ist im 32 des Behälters 30 eingefüllt und eingeschlossen, sie kann in und mit der Aufnahmeeinheit B zur weiteren Nutzung (beispielsweise zur Analyse) transportiert werden.

Bei der ersten, in Fig. 3 und 4 dargestellten Variante der Betätigungsvorrichtung 62 kann die Aufnahmeeinheit B überhaupt nicht geöffnet werden, ohne ein dazu passendes Hilfsmittel zu benützen: diese Variante ist daher in bezug auf die Handhabung eines mit Fluid gefüllten Behälters die sicherere, auch wird nicht für jede Aufnahmeeinheit eine volle separate Betätigungsvorrichtung benötigt, was insbesondere kostengünstiger ist, wenn pro Ventileinheit eine Vielzahl von Aufnahmeeinheiten vorzusehen ist. Zur Entnahme und Nutzung (beispielsweise zur Analyse) der in den Behälter 30 eingefüllten Fluidprobe ist dann auch eine zugeordnete Vorrichtung erforderlich, welche die gleichen Teile der Mitnehmervorrichtung und der Verriegelungsvorrichtung aufweist wie die Ventileinheit.

Bei der zweiten, in Fig. 2 dargestellten Variante der Betätigungsvorrichtung 62 kann die Aufnahmeeinheit B jederzeit geöffnet werden: diese Variante ist daher in bezug auf die Handhabung eines mit Fluid gefüllten Behälters die praktischere, dafür sind die Aufnahmeeinheiten wegen der separaten Betätigungsvorrichtung entsprechend aufwendiger.

Allgemein ist die Ausführung der Erfindung in keiner Weise auf die im vorangehenden beschriebene, nur als Beispiel angegebene Ausbildung beschränkt. Es sind dem Fachmann viele äquivalente Ausbildungen bekannt, deren Ausführung den Rahmen der Erfindung nicht verlässt. Unter den äquivalenten Ausbildungen werden namentlich solche Ausbildungen erwähnt, die mit umgekehrten Oeffnungsrichtungen der Ventileinheit (A) und der Aufnahmeeinheit (B), mit anderen Arten von Flächen als die beschriebene Kombination von Kugelkalotten und/oder mit anderen Arten von Kupplungen als die beschriebenen Kombinationen von Nocken und Ausnehmung realisierbar sind. Auch kann die beschriebene, manuell betriebene Betätigungsvorrichtung durch eine motorisch betriebene Betätigungsvorrichtung äquivalent ersetzt werden.

## Patentansprüche

1. Probenahme-Vorrichtung mit einer zur Anordnung auf einer Leitung (R) bestimmten Ventileinheit (A) und einer daran lösbar angeordneten und zur Aufnahme einer Probe eines in der Leitung (R) geführten Fluids vorgesehenen Aufnahmeeinheit (B), wobei die Ventileinheit (A) in Schliessrichtung federbelastet ist, die Aufnahmeeinheit (B) mit einem in Schliessrichtung federbelasteten Verschluss (40-45) versehen ist, von der Ventileinheit (A) und der Aufnahmeeinheit (B) die eine nach innen und die andere nach aussen öffnend ausgebildet ist, und bei an der Ventileinheit (A) angeordneter Aufnahmeeinheit (B) die Ventileinheit (A) mit dem Verschluss (40-45) abdichtend wirkverbunden ist, **dadurch gekennzeichnet,** dass eine einzige Betätigungsvorrichtung (62;62') zur gleichzeitigen Betätigung der Ventileinheit (A) und der Aufnahmeeinheit (B) vorgesehen ist, und diese Betätigungsvorrichtung (62;62') mit dem Verschluss (40-45) der Aufnahmeeinheit (B) zum Oeffnen derselben wirkverbunden ist und eine mit der Ventileinheit (A) und der Aufnahmeeinheit wirkverbundene Verriegelungsvorrichtung (62;71',72',73') aufweist, deren Ausbildung ein Oeffnen des Verschlusses (40-45) nur dann erlaubt, wenn die Aufnahmeeinheit (B) an der Ventileinheit (A) angeordnet ist und sich relativ dazu in einer vorbestimmten Betätigungslage befindet.

2. Probenahme-Vorrichtung nach Anspruch 1, **dadurch gekennzeichnet,** dass die Aufnahmeeinheit (B) an der Ventileinheit (A) mittels eines Schnellverschlusses (26,27,39,47) befestigbar ist und die Betätigungslage eine dem Schnellverschluss entsprechende Endlage der Aufnahmeeinheit relativ zur Ventileinheit ist.

3. Probenahme-Vorrichtung nach Anspruch 2, **dadurch gekennzeichnet,** dass der Schnellverschluss ein Bajonettverschluss (27,39) oder ein Gewinde und die Betätigungslage eine Endlage einer dem Bajonettverschluss bzw. Gewinde entsprechenden Drehung der Aufnahmeeinheit relativ zur Ventileinheit ist.

4. Probenahme-Vorrichtung nach Anspruch 2, **dadurch gekennzeichnet,** dass der Schnellverschluss ein Steckverschluss und die Betätigungslage eine dem Steckverschluss entsprechende Endlage der Aufnahmeeinheit relativ zur Ventileinheit ist.

5. Probenahme-Vorrichtung nach Anspruch 1, **dadurch gekennzeichnet**, daß die Ventileinheit (A) folgende Elemente aufweist:
- ein Ventilgehäuse (1) mit
- einer Bohrung (2), die einem Innendurchmesser der Leitung (R)entspricht,
- einem Ventilkanal (4), der das Ventilgehäuse (1) geradlinig im wesentlichen diametral zur Bohrung (2) in Richtung einer Längsachse (4c) des Ventilkanals (4) durchquert,
- einem Austrittskanal (4a), der aus einem auf einer Seite der Bohrung (2) liegenden Teil (4b) des Ventilkanals (4) gebildet ist, an einem seiner Enden in die Bohrung (2) einmündet und im Bereich seines anderen Endes einen Ventilsitz (20) aufweist, und
- einer Austrittsöffnung (9) der Ventileinheit (A) am Ende des Ventilkanals in Nähe des Ventilsitzes (20),
- und einen Ventilkörper (10), der im Ventilkanal (4) zwischen zwei Endlagen bewegbar angeordnet ist und versehen ist mit
- einer länglichen Ventilstange (11), die im Ventilkanal (4) verschiebbar gelagert ist, und
- einem Ventilkopf (12), der am einen Ende der Ventilstange (11) angeordnet und daran angeformt ist, in der einen Endlage von innen her am Ventilsitz (20) anliegt und in der anderen Endlage vom Ventilsitz (20) nach innen beabstandet ist,
- wobei die Ventilstange (11) an ihrem vom Ventilkopf (12) abgewandten Ende über eine Schliessvorrichtung (5) der Ventileinheit (A) am Ventilgehäuse (1) abgestützt und von dieser Schliessvorrichtung (5) ständig in Richtung der Längsachse (4c) des Ventilkanals (4) von innen zur Austrittsöffnung (9) der Ventileinheit (A) hin federbelastet ist,
und wobei die Aufnahmeeinheit (B) folgende Elemente aufweist:
- einen Behälter (30) mit einem Hohlraum (32) zur Aufnahme der Probe,
- ein Verschlussgehäuse (41) mit
- einem Verschlusskanal (42), der das Verschlussgehäuse (41) geradlinig in Richtung einer Längsachse (31) des Verschlusskanals (42) durchquert, an einem seiner Enden (52) in den Hohlraum (32) einmündet und im Bereich seines anderen Endes mit einem Verschlusssitz (44) versehen ist, und
- einer Eintrittsöffnung (46) der Aufnahmeeinheit (B) am Ende Verschlusskanals (42) in Nähe des Verschlusssitzes (44),
- und einen Verschlusskörper (40), der im Verschlusskanal (42) zwischen zwei Endlagen bewegbar angeordnet ist und versehen ist mit
- einer länglichen Verschlussstange (43), die im Verschlusskanal (42) verschiebbar gelagert ist, und
- einem Verschlusskopf (45), der am einen Ende der Verschlussstange (43) angeordnet ist, in der einen Endlage von aussen her am Verschlusssitz (44) anliegt und in der anderen Endlage vom Verschlusssitz (44) nach aussen beabstandet ist,
- wobei die Verschlussstange (43) an ihrem vom Verschlusskopf (45) abgewandten Ende (53) über eine Schliessvorrichtung (56) der Aufnahmeeinheit (B) am Verschlussgehäuse (41) abgestützt und von dieser Schliessvorrichtung (56) ständig in Richtung der Längsachse (31) des Verschlusskanals (42) von aussen zur Eintrittsöffnung (46) der Aufnahmeeinheit (B) hin federbelastet ist,
wobei die Längsachse (4c) des Ventilkanals (4) und die Längsachse (31) des Verschlusskanals (42) zusammenfallen, wenn die Aufnahmeeinheit (B) an der Ventileinheit (A) angeordnet ist,
und wobei der Ventilkopf (12) in Nähe des Ventilsitzes (20) sowie der Verschlusskopf (45) in Nähe des Verschlusssitzes (44) mit jeweiligen Flächen (13,59) versehen sind, die zusammenpassend aneinander anliegen, wenn die Aufnahmeeinheit (B) an der Ventileinheit (A) angeordnet ist,
wobei die Austrittsöffnung (9) der Ventileinheit (A) vom Ventilsitz (20) beabstandet und mit diesem über eine Austrittsbohrung (8) verbunden ist, wobei die Ventilstange (11) sich im wesentlichen ausserhalb der Austrittsbohrung (8) und der Austrittsöffnung (9) befindet, und
die Eintrittsöffnung (46) der Aufnahmeeinheit (B) im wesentlichen in Nähe des Verschlusssitzes (44) angeordnet ist, wobei die Verschlussstange (43) von der Eintrittsöffnung (46) umschlossen ist und sich aus der Aufnahmeeinheit (B) über die Eintrittsöffnung (46) hinaus erstreckt.

6. Probenahme-Vorrichtung nach Anspruch 5, **dadurch gekennzeichnet,** dass die genannte Fläche (13) des Ventilkopfes (12) als konvexe Kugelkalotte und die genannte Fläche (59) des Verschlusskopfes (45) als konkave Kugelkalotte ausgebildet ist.

7. Probenahme-Vorrichtung nach Anspruch 5, **dadurch gekennzeichnet,** dass die Betätigungsvorrichtung (62) eine zweiteilige Mitnehmervorrichtung umfasst, wobei der eine Teil (63-67;72',73') der Mitnehmervorrichtung mit dem Ventilgehäuse (1) und der andere Teil (68;68,63'-71') der Mitnehmervorrichtung mit der Verschlussstange (43) wirkverbunden ist, wenn die Aufnahmeeinheit (B) an der Ventileinheit (A) angeordnet ist und sich relativ dazu in der vorbestimmten Betätigungslage befindet.

8. Probenahme-Vorrichtung nach Anspruch 7, **dadurch gekennzeichnet,** dass der mit der Verschlussstange (43) wirkverbundene Teil der Mitnehmervorrichtung eine Ausnehmung (68) und der mit dem Ventilgehäuse (1) wirkverbundene Teil (63-67) der Mitnehmervorrichtung einen in die Ausnehmung einführbaren Nocken (67) umfasst.

9. Probenahme-Vorrichtung nach Anspruch 8, **dadurch gekennzeichnet,** dass die Verriegelungsvorrichtung zweiteilig mit einer am Verschlussgehäuse (41) angeordneten Nut (39) und einem am Ventilgehäuse (1) angeordneten Nocken (27), der erst dann in die Nut (39) einführbar ist, wenn sich die Aufnahmeeinheit (B) relativ zur Ventileinheit (A) in der vorbestimmten Betätigungslage befindet.

10. Probenahme-Vorrichtung nach Anspruch 7, **dadurch gekennzeichnet,** dass die Verriegelungsvorrichtung Mittel umfasst, von denen ein Teil (27,72',73') am Ventilgehäuse (1) und ein anderer Teil (39,71') am Verschlussgehäuse (41) angeordnet ist, und dass der mit dem Ventilgehäuse (1) wirkverbundene Teil der Mitnehmervorrichtung die am Ventilgehäuse (1) angeordneten Mittel (27,72',73') der Verriegelungsvorrichtung umfasst, während einerseits der mit der Verschlussstange (43) wirkverbundene Teil der Mitnehmervorrichtung eine Ausnehmung (68) und andererseits ein mit dem Verschlussgehäuse (41) wirkverbundener Teil der Mitnehmervorrichtung einen am Verschlussgehäuse (41) angelenkten Hebel (63') mit einem in die Ausnehmung einführbaren Nocken (67') umfasst.

11. Probenahme-Vorrichtung nach Anspruch 5, **dadurch gekennzeichnet,** dass der Ventilsitz (20) zusammen mit der Austrittsbohrung (8) und der Austrittsöffnung (9) eine Einheit bildet, die zum Ventilgehäuse (1) abgedichtet und daran lösbar befestigt ist.

## Claims

1. Sampling appliance having a valve unit (A) intended for arrangement on a conduit (R) and a receiver unit (B) releasably arranged on the valve unit (A) and provided to accommodate a sample of a fluid carried in the conduit (R), the valve unit (A) being spring-loaded in the closing direction, the receiver unit (B) being provided with a closure device (40-45) spring-loaded in the closing direction, one unit from the valve unit (A) and the receiver unit (B) being configured to open inwards and the other being configured to open outwards and, when the receiver unit (B) is arranged on the valve unit (A), the valve unit (A) being effectively connected to the closure device (40-45) so as to seal, characterized in that a single actuation appliance (62; 62') is provided for the simultaneous actuation of the valve unit (A) and the receiver unit (B) and this actuation appliance (62; 62') is effectively connected to the closure device (40-45) of the receiver unit (B) in order to open the same and has a locking appliance (62; 71', 72', 73') effectively connected to the valve unit (A) and the receiver unit, the configuration of which locking appliance (62; 71', 72', 73') only permitting opening of the closure device (40-45) when the receiver unit (B) is arranged on the valve unit (A) and is located relative to the latter in a predetermined actuation position.

2. Sampling appliance according to Claim 1, characterized in that the receiver unit (B) can be fastened on the valve unit (A) by means of a rapid-action closure device (26, 27, 39, 47) and the actuation position is an end position of the receiver unit relative to the valve unit corresponding to the rapid-action closure device.

3. Sampling appliance according to Claim 2, characterized in that the rapid-action closure device is a bayonet fitting (27, 39) or a thread and the actuation position is an end position of a rotation of the receiver unit relative to the valve unit corresponding to the bayonet fitting or the thread.

4. Sampling appliance according to Claim 2, characterized in that the rapid-action closure device is a plug-in closure device and the actuation position is an end position of the receiver unit relative to the valve unit corresponding to the plug-in closure device.

5. Sampling appliance according to Claim 1, characterized in that the valve unit (A) has the following elements:
- a valve housing (1) with
- a hole (2), which corresponds to an inner diameter of the conduit (R),
- a valve passage (4), which traverses the valve housing (1) in a straight line essentially diametrally to the hole (2) in the direction of a longitudinal centre line (4c) of the valve passage (4),
- an outlet passage (4a) which is formed from a part (4b), of the valve passage (4), located on one side of the hole (2), which opens at one of its ends into the hole (2) and which has a valve seat (20) in the region of its other end, and
- an outlet opening (9) of the valve unit (A) at the end of the valve passage near the valve seat (20),
- and a valve body (10), which is arranged in the valve passage (4) so that it can be moved between two end positions and is provided with
- a longitudinal valve rod (11), which is displaceably supported in the valve passage (4), and
- a valve head (12), which is arranged at one end of the valve rod (11) and is formed on it, which is in contact with the valve seat (20) from the inside in one of its end positions and which is at a distance from the valve seat (20) towards the inside in the other end position,
- the end of the valve rod (11) facing away from the valve head (12) being supported on the valve housing (1) by means of a closure appliance (5) of the valve unit (A) and being continually spring-loaded by this closure appliance (5) in the direction of the longitudinal centre line (4c) of- the valve passage (4) from the inside towards the outlet opening (9) of the valve unit (A),
and the receiver unit (B) having the following elements:
- a container (30) with a hollow space (32) for accommodating the sample,
- a closure housing (41) with
- a closure passage (42), which traverses the closure housing (41) in a straight line in the direction of a longitudinal centre line (31) of the closure passage (42), which opens at one of its ends (52) into the hollow space (32) and is provided in the region of its other end with a closure seat (44), and
- an inlet opening (46) of the receiver unit (B) at the end of the closure passage (42) near the closure seat (44),
- and a closure body (40), which is arranged in the closure passage (42) so that it can be moved between two end positions and is provided with
- a longitudinal closure rod (43), which is displaceably supported in the closure passage (42), and
- a closure head (45), which is arranged at one end of the closure rod (43), which is in contact with the closure seat (44) from the outside in one of its end positions and which is at a distance from the closure seat (44) towards the outside in the other end position,
- the end (53) of the closure rod (43) facing away from the closure head (45) being supported on the closure housing (41) by means of a closure appliance (56) of the receiver unit (B) and being continuously spring-loaded by this closure appliance (56) in the direction of the longitudinal centre line (31) of the closure passage (42) from the outside towards the inlet opening (46) of the receiver unit (B),
the longitudinal centre line (4c) of the valve passage (4) and the longitudinal centre line (31) of the closure passage (42) coinciding when the receiver unit (B) is arranged on the valve unit (A),
and the valve head (12) and the closure head (45) being provided with respective surfaces (13, 59) near the valve seat (20) and the closure seat (44) respectively, which surfaces are in contact with one another so as to fit together when the receiver unit (B) is arranged on the valve unit (A),
the outlet opening (9) of the valve unit (A) being at a distance from the valve seat (20) and being connected to the latter by means of an outlet hole (8), the valve rod (11) being essentially located outside the outlet hole (8) and the outlet opening (9), and
the inlet opening (46) of the receiver unit (B) being essentially arranged near the closure seat (44), the closure rod (43) being enclosed by the inlet opening (46) and extending out of the receiver unit (B) beyond the inlet opening (46).

6. Sampling appliance according to Claim 5, characterized in that the surface (13) mentioned of the valve head (12) is configured as a convex spherical cap and the surface (59) mentioned of the closure head (45) is configured as a concave spherical cap.

7. Sampling appliance according to Claim 5, characterized in that the actuation appliance (62) includes a two-part drive appliance, one part (63-67; 72', 73) of the drive appliance being effectively connected to the valve housing (1) and the other part (57; 68, 63'-71') of the drive appliance being effectively connected to the closure rod (43) when the receiver unit (B) is arranged on the valve unit (A) and is located relative to the latter in the predetermined actuation position.

8. Sampling appliance according to Claim 7, characterized in that the part of the drive appliance effectively connected to the closure rod (43) includes a recess (68) and the part (63-67) of the drive appliance effectively connected to the valve housing (1) includes a toe (67) which can be introduced into the recess.

9. Sampling appliance according to Claim 8, characterized in that the locking appliance is configured in two parts with a groove (39) arranged on the closure housing (41) and a toe (27) arranged on the valve housing (1), which toe (27) can only be introduced into the groove (39) when the receiver unit (B) is located in the predetermined actuation position relative to the valve unit (A).

10. Sampling appliance according to Claim 7, characterized in that the locking appliance includes means of which one part (27, 72', 73') is arranged on the valve housing (1) and another part (39, 71') is arranged on the closure housing (41), and in that the part of the drive appliance effectively connected to the valve housing (1) includes the means (27, 72', 73') of the locking appliance arranged on the valve housing (1) whereas, on the one hand, the part of the drive appliance effectively connected to the closure rod (43) includes a recess (68) and, on the other hand, a part of the drive appliance effectively connected to the closure housing (41) includes a lever (63') hinged on the closure housing (41) with a toe (67') which can be introduced into the recess.

11. Sampling appliance according to Claim 5, characterized in that the valve seat (20), together with the outlet hole (8) and the outlet opening (9), form a unit which is sealed relative to the valve housing (1) and is releasably fastened on it.

## Revendications

1. Dispositif de prélèvement d'échantillons, comprenant une unité de vanne (A) destinée à être placée sur un conduit (R) et une unité de réception (B) disposée de manière amovible contre cette dernière et prévue pour la réception d'un échantillon d'un fluide guidé dans le conduit (R), l'unité de vanne (A) étant sollicitée par un ressort dans la direction de fermeture, l'unité de réception (B) étant munie d'une fermeture (40-45) sollicitée par un ressort dans la direction de fermeture et, en ce qui concerne l'unité de vanne (A) et l'unité de réception (B), l'une est réalisée pour s'ouvrir vers l'intérieur et l'autre est réalisée pour s'ouvrir vers l'extérieur, et lorsque l'unité de réception (B) est disposée contre l'unité de vanne (A), l'unité de vanne (A) est reliée en activité de manière étanche à la fermeture (40-45), caractérisé en ce qu'on prévoit un seul dispositif de commande (62; 62) pour la mise en oeuvre simultanée de l'unité de vanne (A) et de l'unité de réception (B), et ce dispositif de commande (62; 62') est relié en activité à la fermeture (40-45) de l'unité de réception (B) pour ouvrir cette dernière et présente un dispositif de verrouillage (62; 71', 72', 73') relié en activité à l'unité de vanne (A) et à l'unité de réception, dont la réalisation ne permet une ouverture de la fermeture (40-45) que lorsque l'unité de réception (B) est disposée contre l'unité de vanne (A) et se trouve, par rapport à cette dernière, dans une position de commande prédéterminée.

2. Dispositif de prélèvement d'échantillons selon la revendication 1, caractérisé en ce que l'unité de réception (B) peut être fixée à l'unité de vanne (A) au moyen d'une fermeture rapide (26, 27, 39, 47) et la position de commande est une position finale de l'unité de réception par rapport à l'unité de vanne, correspondant à la fermeture rapide.

3. Dispositif de prélèvement d'échantillons selon la revendication 2, caractérisé en ce que la fermeture rapide est une fermeture à baïonnette (27, 39) ou un filet de vis et la position de commande est une position finale d'une rotation de l'unité de réception par rapport à l'unité de vanne, correspondant à la fermeture à baïonnette ou au filet de vis.

4. Dispositif de prélèvement d'échantillons selon la revendication 2, caractérisé en ce que la fermeture rapide est une fermeture d'enfichage et la position de commande est une position finale de l'unité de réception par rapport à l'unité de vanne, correspondant à la fermeture d'enfichage.

5. Dispositif de prélèvement d'échantillons selon la revendication 1, caractérisé en ce que l'unité de vanne (A) présente les éléments ci-après :
- un logement de vanne (1) comprenant
- un alésage (2) qui correspond au diamètre interne du conduit (R),
- un canal de vanne (4) qui traverse, de façon linéaire, le logement de vanne (1) de manière essentiellement diamétrale par rapport à l'alésage (2) en direction d'un axe longitudinal (4c) du canal de vanne (4),
- un canal d'évacuation (4a) qui est formé à partir d'une partie (4b) du canal de vanne (4) située d'un côté de l'alésage (2), qui débouche, à une de ses extrémités, dans l'alésage (2) et qui présente un siège de vanne (20) dans la zone de son autre extrémité, et
- une ouverture d'évacuation (9) de l'unité de vanne (A) à l'extrémité du canal de vanne à proximité du siège de vanne (20),
- et un corps de vanne (10) qui est disposé dans le canal de vanne (4) en mobilité entre deux positions finales et qui est muni
- d'une tige de vanne longitudinale (11) qui est logée en coulissement dans le canal de vanne (4), et
- d'une tête de vanne (12) qui est disposée contre une extrémité de la tige de vanne (11) et qui y est façonnée, qui vient se disposer contre le siège de vanne (20) depuis l'intérieur dans la première position finale et qui est écartée vers l'intérieur du siège de vanne (20) dans l'autre position finale,
- la tige de vanne (11) venant s'appuyer contre le logement de vanne (1) à son extrémité qui se détourne de la tête de vanne (12) à l'intervention d'un dispositif de fermeture (5) de l'unité de vanne (A) et étant sollicitée par un ressort de la part de ce dispositif de fermeture (5) de manière constante en direction de l'axe longitudinal (4c) du canal de vanne (4) depuis l'intérieur en direction de l'ouverture d'évacuation (9) de l'unité de vanne (A),
et l'unité de réception (B) présente les éléments ci-après :
- un récipient (30) comprenant un espace vide (32) pour la réception de l'échantillon,
- un logement de fermeture (41) comprenant
- un canal de fermeture (42) qui traverse, de manière linéaire, le logement de fermeture (41) en direction d'un axe longitudinal (31) du canal de fermeture (42), qui débouche, à une de ses extrémités (52), dans l'espace vide (32) et qui est muni d'un siège de fermeture (44) dans la zone de son autre extrémité, et
- une ouverture d'admission (46) de l'unité de réception (B) à l'extrémité du canal de fermeture (42) à proximité du siège de fermeture (44),
- ainsi qu'un corps de fermeture (40) qui est disposé dans le canal de fermeture (42) en mobilité entre deux positions finales et qui est muni
- d'une tige longitudinale de fermeture (43) qui est montée en coulissement dans le canal de fermeture (42), et
- d'une tête de fermeture (45) qui est disposée contre une extrémité de la tige de fermeture (43), qui vient se disposer contre le siège de fermeture (44) depuis l'extérieur dans la première position finale et qui est écartée du siège de fermeture (44) vers l'extérieur dans l'autre position finale,
- la tige de fermeture (43) venant s'appuyer contre le logement de fermeture (41) à son extrémité (53) se détournant de la tête de fermeture (45) à l'intervention d'un dispositif de fermeture (56) de l'unité de réception (B) et étant sollicitée par un ressort de la part de ce dispositif de fermeture (56) de manière constante en direction de l'axe longitudinal (31) du canal de fermeture (42) depuis l'extérieur en direction de l'ouverture d'admission (46) de l'unité de réception (B),
l'axe longitudinal (4c) du canal de vanne (4) et l'axe longitudinal (31) du canal de fermeture (42) coïncidant lorsque l'unité de réception (B) est disposée contre l'unité de vanne (A),
et dans lequel la tête de vanne (12) à proximité du siège de vanne (20), ainsi que la tête de fermeture (45) à proximité du siège de fermeture (44) sont munies de surfaces respectives (13, 59) qui viennent se disposer l'une contre l'autre en adaptation mutuelle lorsque l'unité de réception (B) est disposée contre l'unité de vanne (A),
l'ouverture d'évacuation (9) de l'unité de vanne (A) étant écartée du siège de vanne (20) et reliée à ce dernier à l'intervention d'un alésage d'évacuation (8), la tige de vanne (11) se trouvant essentiellement à l'extérieur de l'alésage d'évacuation (8) et de l'ouverture d'évacuation (9), et
l'ouverture d'admission (46) de l'unité de réception (B) étant disposée essentiellement à proximité du siège de fermeture (44), la tige de fermeture (43) étant entourée par l'ouverture d'admission (46) et s'étendant vers l'extérieur hors de l'unité de réception (B) au-delà de l'ouverture d'admission (46).

6. Dispositif de prélèvement d'échantillons selon la revendication 5, caractérisé en ce que la surface mentionnée (13) de la tête de vanne (12) est réalisée en forme de calotte sphérique convexe et la surface mentionnée (59) de la tête de fermeture (45) est réalisée en forme de calotte sphérique concave.

7. Dispositif de prélèvement d'échantillons selon la revendication 5, caractérisé en ce que le dispositif de commande (62) comprend un dispositif d'entraînement en deux parties, dans lequel la première partie (63-67; 72', 73') du dispositif d'entraînement est reliée en activité au logement de vanne (1) et l'autre partie (68; 68, 63'-71') du dispositif d'entraînement est reliée en activité à la tige de fermeture (43) lorsque l'unité de réception (B) est disposée contre l'unité de vanne (A) et se trouve dans la position de commande prédéterminée par rapport à cette dernière.

8. Dispositif de prélèvement d'échantillons selon la revendication 7, caractérisé en ce que la partie du dispositif d'entraînement reliée en activité à la tige de fermeture (43) comprend un évidement (68) et la partie (63-67) du dispositif d'entraînement reliée en activité au logement de vanne (1) comprend une saillie (67) qui peut venir s'insérer dans l'évidement.

9. Dispositif de prélèvement d'échantillons selon la revendication 8, caractérisé en ce que le dispositif de verrouillage peut venir s'insérer en deux parties à l'aide d'une rainure (39) pratiquée dans le logement de fermeture (41) et à l'aide d'une saillie (27) disposée sur le logement de vanne (1), la saillie pouvant seulement venir s'insérer dans la rainure (39) lorsque l'unité de réception (B) se trouve dans la position de commande prédéterminée par rapport à l'unité de vanne (A).

10. Dispositif de prélèvement d'échantillons selon la revendication 7, caractérisé en ce que le dispositif de verrouillage comprend des moyens, une partie (27, 72', 73') de ces derniers étant disposée contre le logement de vanne (1) et une autre partie (39, 71') étant disposée contre le logement de fermeture (41), et en ce que la partie du dispositif d'entraînement reliée en activité au logement de vanne (1) comprend les moyens (27, 72', 73') du dispositif de verrouillage disposés contre le logement de vanne (1), tandis que, d'une part, la partie du dispositif d'entraînement reliée en activité à la tige de fermeture (43) comprend un évidement (68) et, d'autre part, une partie du dispositif d'entraînement reliée en activité au logement de fermeture (41) comprend un levier (63') articulé au logement de fermeture (41) muni d'une saillie (67') qui peut venir s'insérer dans l'évidement.

11. Dispositif de prélèvement d'échantillons selon la revendication 5, caractérisé en ce que le siège de vanne (20) forme une unité conjointement avec l'alésage d'évacuation (8) et l'ouverture d'évacuation (9), qui procure une étanchéité par rapport au logement de vanne et qui y est fixée de manière amovible.
